# EUROPÄISCHE PATENTSCHRIFT

(11) **EP 0 993 001 B1**
(45) Veröffentlichungstag und Bekanntmachung des Hinweises auf die Patenterteilung: **11.06.2003**
(21) Anmeldenummer: 99119477.0
(22) Anmeldetag: 30.09.1999
(51) Int. Cl.: G21C 19/317

(54) **Vorrichtung zum Beseitigen von Wasserstoff**
Apparatus for eliminating hydrogen
Dispositif pour éliminer de l'hydrogène

(30) Priorität: 07.10.1998 DE 19846058
(43) Veröffentlichungstag der Anmeldung: 12.04.2000
(73) Patentinhaber: Forschungszentrum Jülich GmbH, 52425 Jülich (DE)
(72) Erfinder: Bröckerhoff, Peter, Dr., 52428 Jülich (DE); von Lensa, Werner, Dr., 52379 Langerwehe (DE); Reinecke, Ernst-Arndt, 52064 Aachen (DE); Voswinckel, Moritz, 52062 Aachen (DE)
(74) Vertreter: Cohausz & Florack

(56) Entgegenhaltungen:
- EP-A- 0 599 618
- WO-A-96/18218
- WO-A-98/39091
- WO-A-99/36923
- DE-A- 4 221 693
- DE-C- 19 722 305
- DE-C- 19 751 171
- US-A- 4 228 132
- US-A- 5 035 875

## Beschreibung

Die Erfindung bezieht sich auf eine Vorrichtung der im Oberbegriff des Anspruch 1 angegebenen Art zum Beseitigen von Wasserstoff in Brennern oder katalytischen Rekombinatoren. Eine solche Vorrichtung ist aus der DE-C-19722305 bekannt.

In verschiedenen Anlagen der Energie- und Verfahrenstechnik besteht nach dem Eintreten von Störfällen die Gefahr des Austritts von Wasserstoff. Dabei kann, wenn Sauerstoff vorhanden ist, ein brennbares Gasgemisch entstehen, das entweder turbulent deflagrieren oder detonieren kann. Bei der Detonation kann die erzeugte Druckwelle die Komponenten einer Anlage oder die Anlage selbst gefährden oder sogar zerstören und die Umgebung belasten.

Große Wasserstoffmengen sind bei schweren Störfällen, z. B. in mit Wasser gekühlten Kernreaktoren (LWR) mit nichtinertisierten Sicherheitsbehältern (Containments), zu erwarten.

Der Wasserstoff entsteht in diesen Reaktoren bei einem Ausfall relevanter Sicherheitseinrichtungen und der nachfolgenden Überhitzung des Reaktorkerns durch Reaktion des Wasserdampfs mit den Hüllen der Brennelemente. Dabei können bei einem großen LWR in wenigen Stunden etwa bis zu 20000 m_{N}³ Wasserstoff in den Sicherheitsbehälter oder das Containment freigesetzt werden.

Vorbeugende Sicherheitsvorkehrungen bestehen in der Inertisierung der Gasvolumina mit Stickstoff, wie sie im Fall der Siedewasserreaktoren geplant oder auch schon vorgenommen ist. Diskutierte und zum Teil bereits realisierte Gegenmaßnahmen stellen katalytische Rekombinatoren dar. Mit deren Hilfe wird der entstandene Wasserstoff sowohl innerhalb als auch außerhalb der Zündgrenzen exotherm katalytisch rekombiniert, d. h. unter Entstehung von Wärme in Wasserdampf umgesetzt. Wasserstoffgehalte mit Konzentrationen innerhalb der Zündgrenzen lassen sich darüber hinaus auch konventionell nach Fremdzündung abbrennen.

Zur Beseitigung von Wasserstoff aus Sicherheitsbehältern wurden sowohl thermische als auch katalytische Rekombinatoren entwickelt, die den Wasserstoff mit dem Sauerstoff der Luft in Wasserdampf umwandeln. Bevorzugt werden allerdings katalytische Systeme, die passiv, d. h. ohne Ansteuerung und ohne Zufuhr von Strom, also ohne Beheizung und externer Energie zur Zwangsdurchströmung, arbeiten, da sonst die Verfügbarkeit bei Ausfall der externen Energieversorgung in Frage gestellt sein könnte. Zur Zeit gibt es zwei Konzepte, die in umfangreichen Tests ihre Brauchbarkeit unter Beweis gestellt haben, u. a. auch hinsichtlich möglicher Katalysatorgifte. Als Substrate werden sowohl metallische Folien als auch hochporöses Granulat verwendet, auf die Platin bzw. Palladium als Katalysator aufgebracht ist. Mehrere Folien und Granulatpakete - dabei wird das Granulat von Drahtnetzen zusammengehalten und zu Paketen geformt - sind vertikal und parallel zueinander in Blechgehäusen angeordnet. Das Wasserstoff-/Luftgemisch tritt unten in das Gehäuse ein. An den katalytisch beschichteten Oberflächen setzt die Reaktion ein.

Als Nachteil ist die vorherige Gemischbildung in den großen Volumina der Containments anzusehen, so daß eine Gefahr von Explosionen im Containment besteht. Zündquellen sind in derart komplexen Anlagen, besonders nach Eintritt schwerer Unfälle, nicht auszuschließen. Außerdem werden die Reaktionspartner Sauerstoff und Wasserstoff den Rekombinatoren so zugeführt, wie sie nach Vermischung entstehen bzw. örtlich vorliegen. Eine gezielte Vor- oder Vermischung vor Eintritt in die Rekombinatoren gibt es nicht. Die maximalen Abbauraten bzw. thermischen Leistungen sind begrenzt aufgrund der Überströmung der katalytischen Oberflächen und wegen der niedrigen Wärmeabfuhr infolge Konvektion. Außerdem ist die Möglichkeit zur Wärmespeicherung gering. Zu große Wasserstoffmengen können somit zu einer Überhitzung der beschichteten Substrate führen, so daß die Zündgrenze erreicht oder überschritten wird und es infolgedessen zu außerdem homogenen Gasphasenreaktionen mit Deflagration bzw. Detonation kommen kann.

Die Abfuhr der Reaktionswärme aus den Systemen ist grundsätzlich problematisch. Sie erfolgt fast ausschließlich infolge Konvektion von den festen Oberflächen an die vorbeiströmenden Gase sowie Wärmestrahlung an die benachbarten Strukturen. Aufgrund der geringen Bauhöhen ist der Auftrieb innerhalb des Rekombinators gering. Die Strömung ist laminar, der Wärmeübergangskoeffizient infolgedessen klein. Als Nachteil ist auch die zusätzliche Aufheizung der Umgebung anzusehen.

Speziell bei großen Freisetzungsraten werden zudem hohe Dampfund Wasserstoffkonzentrationen eine Rekombination wegen zu geringer Sauerstoffkonzentrationen verbunden.

Daher liegt der vorliegenden Erfindung das technische Problem zugrunde, sowohl große als auch kleine Wasserstoffmengen bereits in der Nähe des Entstehungsortes kontrolliert umzusetzen, wobei insbesondere eine ausreichende Sauerstoffzufuhr für die Umsetzung auch großer Wasserstoffmengen gewährleistet ist.

Das zuvor aufgezeigte technische Problem wird erfindungsgemäß durch eine Vorrichtung zum Beseitigen von Wasserstoff gemäß den Merkmalen des Anspruches 1 gelöst. Erfindungsgemäß ist erkannt worden, daß gerade bei großen anfallenden Wasserstoffmengen der für die Rekombination benötigte Sauerstoff aus den übrigen Containmentbereichen abgezogen und gezielt der Vorrichtung zum Umsetzen von Wasserstoff und Sauerstoff zugeführt werden muß. Dabei werden Druckdifferenzen zwischen dem Entstehungsort des Wasserstoffes und den übrigen Containmentbereichen sowie in den Atmosphären vorhandene Energien zum Antrieb von Maschinen genutzt, mit denen z. B. der zur Beseitigung benötigte Luftsauerstoff antransportiert und zusammen mit dem Wasserstoff in die Vorrichtung zum Umsetzen von Wasserstoff und Sauerstoff eingeleitet wird. Somit können die in die Containments gelangenden Wasserstoffmengen soweit abgereichert werden, daß sie unterhalb der Zündgrenze liegen und damit das Gefährdungspotential gemindert ist. Weiter wird die bei der Beseitigung entstehende Reaktionswärme zum Antrieb der Maschinen genutzt und ggf. mittels Kühlern abgeführt, so daß die Containmentatmosphären nicht zusätzlich aufgeheizt werden. Die erfindungsgemäße Vorrichtung ist, z. B. unter Nutzung von Turbinenprozessen, daher über einen großen Durchsatzbereich einsetzbar, da die je nach Störfallszenario in stark unterschiedlicher Menge freigesetzten Wasserstoff- und Dampfmengen umgesetzt werden können.

Da die Turbine ihre Antriebsenergie der Betriebsatmosphäre entnimmt, entspricht sie den Kriterien passiver, d. h. selbsttätiger Sicherheitseinrichtungen.

In bevorzugter Weise ist die Turbine strömungsaufwärts der Vorrichtung zum Umsetzen von Wasserstoff und Sauerstoff angeordnet und mit der Einlaßleitung verbunden. Daher befindet sich die Turbine an der Eingangsseite und wird von dem eintretenden Gasgemisch zu einer Drehbewegung angetrieben.

Ebenso ist es möglich, die Turbine strömungsabwärts der Vorrichtung zum Umsetzen von Wasserstoff und Sauerstoff anzuordnen und mit der Auslaßleitung zu verbinden. In diesem Fall wird das nach der Umsetzung des Wasserstoffes entstehende Gasgemisch zum Antrieb der Turbine verwendet. Die letztgenannte Anordnung ist insbesondere dann vorteilhaft, wenn ein zweiter Verdichter strömungsaufwärts der Vorrichtung zum Umsetzen von Wasserstoff und Sauerstoff angeordnet und mit der Einlaßleitung verbunden ist. In diesem Fall wird in dem zweiten Verdichter das einströmende, Wasserstoff enthaltende Gasgemisch zunächst verdichtet, bevor es in die Vorrichtung zum Umsetzen von Wasserstoff und Sauerstoff eingeleitet wird.

Als Vorrichtung zum Umsetzen von Wasserstoff und Sauerstoff können sowohl ein Brenner als auch Rekombinator verwendet werden.

Weiterhin sind in vorteilhafter Weise der erste und/oder der zweite Verdichter als Turbinenverdichter ausgebildet, so daß die bei Störfällen auftretenden hohen Gasströme wegen der durch Turbinenverdichter möglichen hohen Gasdurchsetzungsraten von der erfindungsgemäßen Vorrichtung bewältigt werden können. Somit wird insbesondere eine von Gasdurchsatz und von der Drehzahl der Turbineneinheiten abhängige Menge an Luft bzw. an Gasgemisch der Vorrichtung zum Umsetzen von Wasserstoff und Sauerstoff zugeführt. Die Verdichter können jedoch auch beispielsweise als Kolbenverdichter, als atmosphärische Dampfmaschinen oder als Sterlingmotoren ausgebildet sein.

Die Vorrichtung zum Umsetzen von Wasserstoff und Sauerstoff kann als Brenner oder als Rekombinator ausgebildet und unterhalb einer Wasseroberfläche angeordnet sein. Dies führt dazu, daß die in dem Brenner oder Rekombinator entstehende große Wärmeenergie möglichst optimal abgeführt wird, was insbesondere durch den vollflächigen Kontakt mit einem Wasservolumen erreicht wird.

Die vorgenannten sowie beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so daß die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus der nachfolgenden Beschreibung der zugehörigen Zeichnung, in der - beispielhaft - bevorzugte Ausführungsformen der erfindungsgemäßen Vorrichtung zum Beseitigen von Wasserstoff dargestellt sind. In der Zeichnung zeigen:
- Fig. 1: eine erfindungsgemäße Vorrichtung zum Beseitigen von Wasserstoff sowie deren Anordnung innerhalb einer Sicherheitszelle eines Kernkraftwerkes,
- Fig. 2: ein erstes Ausführungsbeispiel einer erfindungsgemäßen Vorrichtung zum Beseitigen von Wasserstoff im Querschnitt und
- Fig. 3: ein zweites Ausführungsbeispiel einer erfindungsgemäßen Vorrichtung zum Beseitigen von Wasserstoff im Querschnitt.

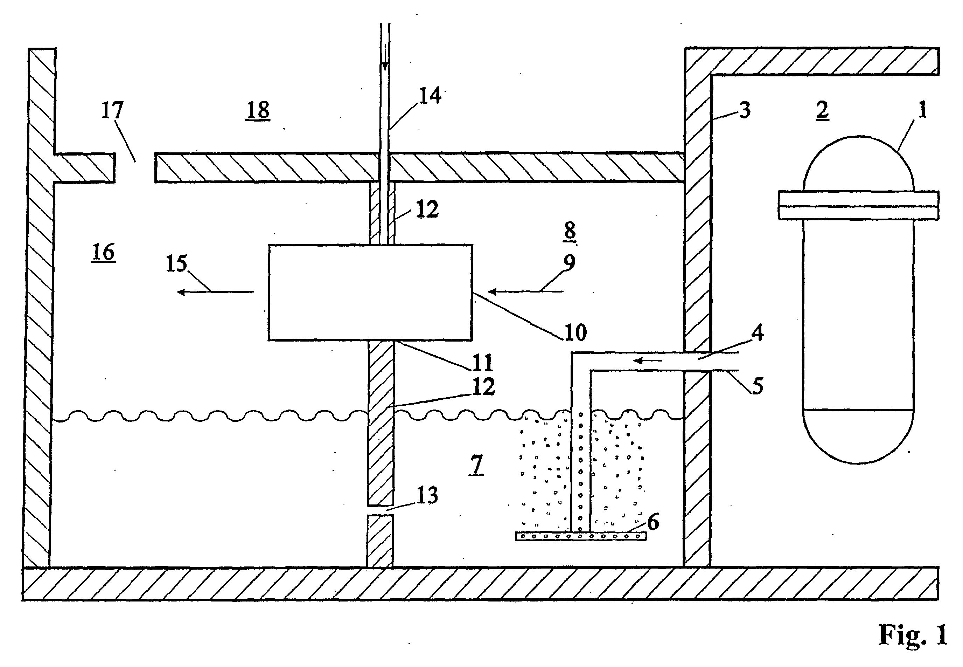

Fig. 1 zeigt schematisch eine erfindungsgemäße Vorrichtung zum Beseitigen von Wasserstoff mit Einrichtungen zum Antransport von Luft sowie zum gezielten Zuführen der wasserstoffreichen Störfallatmosphäre und deren Anordnung innerhalb einer Sicherheitszelle. Als Ausführungsbeispiel wurde ein Druckwasserreaktor (DWR) fortschrittlicher Bauart mit großen Wasservorratsbecken in der Nähe des Reaktordruckbehälters gewählt.

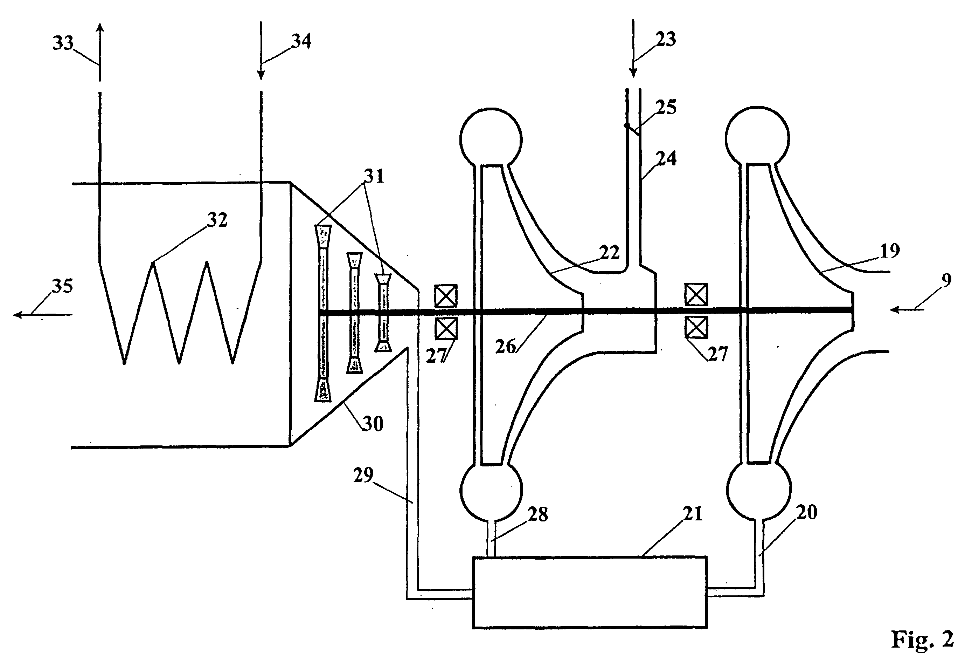

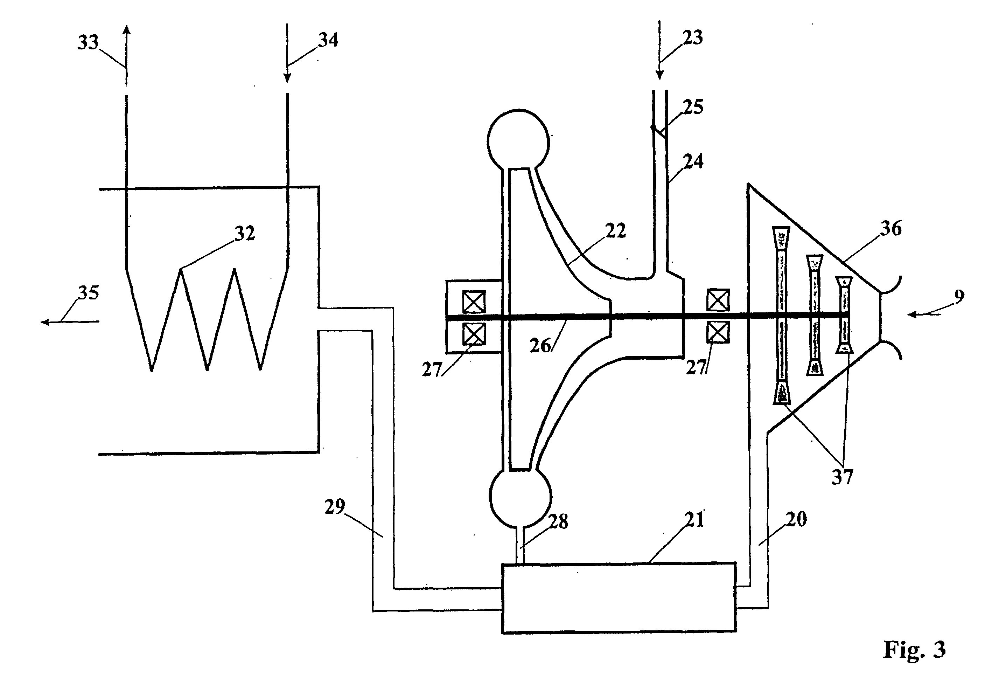

Der Reaktordruckbehälter 1 ist innerhalb einer Sicherheitszelle 3 angeordnet. Nach einem Störfall wird die Störfallatmosphäre 2 freigesetzt. In der Öffnung 4 der Sicherheitszelle ist eine Leitung 5 angebracht, durch die ein Teil der freigesetzten Störfallatmosphäre strömen kann. Der Pfeil innerhalb der Leitung 5 zeigt die Strömungsrichtung an. Die durch die Leitung 5 5 geströmte Teilmenge perlt durch eine Verteilungseinrichtung (Sparger) 6, die in die Wasservorlage 7 eintaucht, und gibt dort vorwiegend durch Dampfkondensation einen Teil ihrer Wärme ab. Dort werden auch Aerosole ausgewaschen. Über der Wasservorlage befindet sich die Freisetzungskammer 8. Aufgrund des Überdrucks setzt eine Strömung 9 durch eine nur schematisch angedeutete Vorrichtung 10 ein, mit der sowohl Luft und Wasserstoff antransportiert als auch Wasserstoff beseitigt werden können. Diese Vorrichtung 10, die in den Fig. 2 und 3 näher dargestellt ist, ist in einer Öffnung 11 der Trennwand 12 angeordnet.

In der Trennwand 12 ist weiterhin eine Leitung 14 zum Antransport der Luft, siehe Pfeil, angedeutet. Mit 15 wird das die Vorrichtung verlassende Gemisch bezeichnet. Es strömt in den Raum 16 und von dort durch die Öffnung 17 in die darüberliegenden Räume 18 des Containments.

Zum Ausgleichen von Druckschwankungen in den Gasräumen 8 und 16 ist die Trennwand 12 im Bodenbereich des Kühlwasserbekkens mit einem Wasserdurchtritt 13 versehen. Dieser Wasserdurchtritt 13 dient bei extremen Druckstößen auch als zusätzliche Entlastungsöffnung.

Die zuvor beschriebene Vorrichtung führt bereits in der Nähe des Entstehungsortes zu einer Vermischung des Wasserstoffs und vermeidet selbst bei unzureichender Umsetzung das Entstehen wasserstoffreicher Gemische infolge Beimischung von Containmentluft.

Fig. 2 zeigt eine erste Ausführungsform der in der zuvor beschriebenen Fig. 1 dargestellten Vorrichtung 10. Die wasserstoffreiche und unter erhöhtem Druck stehende Atmosphäre der Freisetzungskammer 8 gelangt über einen Turbinenverdichter 19 und eine Leitung 20 in einen Brenner oder Rekombinator 21. In dem Brenner oder Rekombinator 21 findet bei Anwesenheit von Luftsauerstoff in der Atmosphäre 9 der Freisetzungskammer 8 bereits eine Verbrennung oder Umsetzung des Wasserstoffs statt. Anschließend wird das Gasgemisch über eine Leitung 29 einer Turbine 30 zugeführt. In ihr findet eine Entspannung statt, welche die Turbine 30 und damit den Turbinenverdichter 19 und einen weiteren Verdichter 22 antreibt. Somit wird - wie oben beschrieben - das in den Brenner strömende Gemisch 20 mit Hilfe des Turbinenverdichters 19 verdichtet. Die Zuführung des Wasserstoffs kann grundsätzlich auch über ein mit Rückschlagklappen versehenes Rohrsystem erfolgen, das mehrere potentielle Freisetzungsorte mit der Vorrichtung verbindet.

Der zur weiteren Verbrennung benötigte Luftsauerstoff 23 wird aufgrund des Unterdrucks auf der Saugseite des Verdichters 22 aus anderen Bereichen der Reaktoranlage durch die Leitung 24 herantransportiert, verdichtet und dem Brenner oder Rekombinator 21 über eine Leitung 28 zugeführt. Zur Verhinderung von Rückströmungen in der Leitung 24 ist eine Rückschlagklappe 25 vorgesehen.

Der Antrieb der Verdichtereinheiten 19 und 22 erfolgt hier beispielhaft nur über eine Welle 26, welche in den angedeuteten Lagern 27 leicht drehbar, z. B. mit Magnetlagern, aufgefangen ist. Die Auslegung der Turbine 30 und der Turboverdichter 19 und 22 erfolgt so, daß die Turbinen und Turbinenverdichter bei freier Durchströmung selbsttätig in der vorgesehenen Drehrichtung anlaufen. Im Brenner oder Rekombinator 21, der wegen der vorgeschalteten Verdichterstufen 19 und 22 und der Nutzung der Druckdifferenzen zwangsdurchströmt wird, findet die Reaktion von Wasserstoff und Sauerstoff statt. Das über eine Leitung 29 austretende Gasgemisch enthält Inertstoffe, nicht umgesetzte Anteile und Reaktionsprodukte, z. B. Wasserdampf, deren Kondensationsenergie ebenfalls in der nachgeschalteten Turbine 30 genutzt werden können. Die Turbine 30 weist im vorliegenden Ausführungsbeispiel drei Schaufelkränze 31 auf.

Ein weiterer Teil der Reaktionswärme wird in einem nachgeschalteten Wasserkühler 32 abgeführt. Das warme Wasser wird durch die Leitung 33 in äußere Wasserbecken oder - in Naturkonvektion - an höhergelegene Kühltürme geleitet. Durch die Leitung 34 gelangt das kühlere Wasser wieder in den Wasserkühler 32 zurück. Als Wasservorlagen stehen z. B. oberhalb der Containments vorhandene oder das in Fig. 1 angedeutete Becken mit der Wasservorlage 7 zur Verfügung, falls auf der Welle 26 auch Pumpeinrichtungen zur Zirkulation des Kühlwassers angebracht werden. Das Gasgemisch 35 tritt aus der gesamten Vorrichtung in Fig. 2 nach links aus.

Eine Modifikation der Vorrichtung 10 zeigt Fig. 3. Bei dieser Anordnung ist eine Turbineneinheit 36 mit den Schaufelkränzen 37 an der Eintrittsöffnung der Vorrichtung 10 angeordnet, die von der einströmenden wasserstoffreichen Atmosphäre und damit auch der Verdichter 22 über die Welle 26 angetrieben wird. Die Welle 26 ist dabei mit Wellenlagern 27 gelagert. Aufgrund der Entspannung des Gemischs, das durch die Leitung 20 strömt, wird der Brenner oder Rekombinator 21 weniger effektiv arbeiten als in der Fig. 2, da nur die Druckdifferenz zwischen der Freisetzungskammer 8 und dem nachfolgenden Raum 16 genutzt wird. Die Luft 23 wird wie zuvor durch die Leitung 24 herangeführt, im Verdichter 22 verdichtet und über die Leitung 28 in den Brenner oder Rekombinator 21 geleitet. Dort findet die Umsetzung des Wasserstoffs unter Anwesenheit von Sauerstoff entweder katalytisch oder unter Nutzung von Zündquellen statt. Die Produkte gelangen dann über die Leitung 29 in den Kühler 32 mit Ableitung 33 und Zuleitung 34. Abgereichert und abgekühlt verläßt das Gemisch 35 die Vorrichtung.

Die bei dem in Fig. 1 gezeigten Beispiel in der Öffnung 11 angeordnete Vorrichtung 10 kann wahlweise auch in oder an den zuvor genannten Öffnungen 4 oder 17 oder an anderen Stellen montiert werden, an denen mit hohem Wasserstoffdurchsatz zu rechnen ist. Bei Nutzung der Reaktionswärme zum Antrieb der Turboverdichtereinheit ist speziell bei höheren Wasserstoffkonzentrationen davon auszugehen, daß die gesamte Vorrichtung nicht mehr vom externen Überdruck angetrieben wird, sondern selbst einen Unterdruck zum Antransport von Wasserstoff aus der Umgebung erzeugt. Die Ansaugöffnung kann daher gegebenenfalls auch mit zusätzlichen Ansaugrohren in mögliche Wasserstoffaustrittsbereiche versehen werden. Rückschlagklappen in den Rohren verhindern das Überströmen von Wasserstoff aus den Bereichen mit höheren Freisetzungsdrükken. Damit kann die Vorrichtung 10 den jeweiligen Erfordernissen angepaßt werden. Dies gilt für beide zuvor beschriebene Ausführungsformen der Fign. 2 und 3. Wie bereits erwähnt, kann auf der Welle der Vorrichtungen auch eine Pumpe angeordnet werden, mit der das Kühlwasser durch die Kühleinheit gefördert wird. Weiterhin sind auch Kopplungen anderer Aggregate denkbar, mit denen der Störfall besser beherrscht werden kann. Gleichermaßen sind auch Anwurf- oder Antriebsmaschinen kombinierbar, welche aber bei Ausfall die passive Funktion der Einrichtung 10 nicht behindern dürfen.

Anstelle der Turboverdichtereinheiten sind alternativ auch Kolbenmaschinen, atmosphärische Dampfmaschinen oder Stirlingmotoren denkbar, die ebenfalls mit den Energien der Containmentatmosphären angetrieben werden können. Die Umsetzung des Wasserstoffs könnte bei Verwendung von Stirlingmotoren bereits ganz oder teilweise am katalytisch beschichteten Wärmekopf stattfinden.

In den dargestellten Ausführungsformen der Fign. 2 und 3 ist auch eine Anordnung des Brenners oder Rekombinators 21 unterhalb der Wasseroberfläche im Wasserbecken 7 der Fig. 1 oder eine Einleitung der Reaktionsprodukte über einen weiteren Sparger möglich, damit eine effektive Kühlung ohne separaten Kühlkreislauf realisiert werden kann. Eine weitere Möglichkeit der verbesserten Wärmeabfuhr und der Vermeidung von Überhitzung besteht im modularen Aufbau der Brenner oder Rekombinatoren, wodurch die Oberfläche des Rekombinators vergrößert werden kann. Die Reaktion innerhalb des Rekombinators kann sowohl katalytisch erfolgen als auch mittels interner Zündung initiiert werden.

## Patentansprüche

1. Vorrichtung zum Beseitigen von Wasserstoff
- mit einer Vorrichtung (21) zum Umsetzen von Wasserstoff und Sauerstoff,
- mit einer Turbine (30,36), die mit einer Welle (26) drehfest verbunden ist, und
- mit einem ersten Verdichter (22), der mit der Welle (26) verbunden ist,
- wobei die Welle (26) die von der Turbine (30,36) erzeugte Drehbewegung auf den ersten Verdichter (22) überträgt,
**dadurch gekennzeichnet,**
- **daß** die Vorrichtung (21) zum Umsetzen von Wasserstoff und Sauerstoff zwei Einlaßleitungen (20,28) und eine Auslaßleitung (29) aufweist,
- **daß** eine erste Einlaßleitung (20) zum Einlassen eines wasserstoffhaltigen Gasgemisches und eine zweite Einlaßleitung (28) zum Einlassen eines sauerstoffhaltigen Gasgemisches dienen und wobei die Auslaßleitung (29) zum Auslassen des Gasgemisches nach einem zumindest teilweisen Umsetzen des Wasserstoffes und des Sauerstoffes dient und
- **daß** der erste Verdichter (22) mit der zweiten Einlaßleitung (28) verbunden ist und das Sauerstoff enthaltende Gasgemisch der Vorrichtung (21) zum Umsetzen von Wasserstoff und Sauerstoff verdichtet zuführt.

2. Vorrichtung nach Anspruch 1, **dadurch gekennzeichnet, daß** die Turbine (36) strömungsaufwärts der Vorrichtung (21) zum Umsetzen von Wasserstoff und Sauerstoff angeordnet und mit der ersten Einlaßleitung (20) verbunden ist.

3. Vorrichtung nach Anspruch 1, **dadurch gekennzeichnet, daß** die Turbine (30) strömungsabwärts der Vorrichtung (21) zum Umsetzen von Wasserstoff und Sauerstoff angeordnet und mit der Auslaßleitung (29) verbunden ist.

4. Vorrichtung nach einem der Ansprüche 1 bis 3,
**dadurch gekennzeichnet, daß** ein zweiter Verdichter (19) strömungsaufwärts der Vorrichtung (21) zum Umsetzen von Wasserstoff und Sauerstoff angeordnet und mit der ersten Einlaßleitung (20) verbunden ist.

5. Vorrichtung nach einem der Ansprüche 1 bis 4,
**dadurch gekennzeichnet, daß** die Vorrichtung (21) zum Umsetzen von in einem Gasgemisch enthaltenen Wasserstoff und von Sauerstoff als Brenner oder Rekombinator (21) ausgebildet ist.

6. Vorrichtung nach einem der Ansprüche 1 bis 5,
**dadurch gekennzeichnet, daß** der erste Verdichter (19) und/oder der zweite Verdichter (22) als Turbinenverdichter, als Kolbenverdichter, als atmosphärische Dampfmaschine oder als Stirlingmotor ausgebildet ist.

## Claims

1. Apparatus for eliminating hydrogen
- with a device (21) for converting hydrogen and oxygen,
- with a turbine (30, 36), which is rotationally fixed to a shaft (26), and
- with a first compressor (22), which is connected to the shaft (26),
- the shaft (26) transmitting the rotary motion generated by the turbine (30, 36) to the first compressor (22),
**characterised in that**
- the device (21) for converting hydrogen and oxygen has two inlet lines (20, 28) and one outlet line (29),
- a first inlet line (20) serves to admit a hydrogen-containing gas mixture and a second inlet line (28) serves to admit an oxygen-containing gas mixture, the outlet line (29) serving to discharge the gas mixture after an at least partial conversion of the hydrogen and the oxygen, and
- the first compressor (22) is connected to the second inlet line (28) and feeds the oxygen-containing gas mixture in a compressed form to the device (21) for converting hydrogen and oxygen.

2. Apparatus according to claim 1, **characterised in that** the turbine (36) is arranged upstream of the device (21) for converting hydrogen and oxygen and is connected to the first inlet line (20).

3. Apparatus according to claim 1, **characterised in that** the turbine (30) is arranged downstream of the device (21) for converting hydrogen and oxygen and is connected to the outlet line (29).

4. Apparatus according to any one of claims 1 to 3, **characterised in that** a second compressor (19) is arranged upstream of the device (21) for converting hydrogen and oxygen and is connected to the first inlet line (20).

5. Apparatus according to any one of claims 1 to 4, **characterised in that** the device (21) for converting hydrogen contained in a gas mixture and oxygen is in the form of a burner or recombiner (21).

6. Apparatus according to any one of claims 1 to 5, **characterised in that** the first compressor (19) and/or the second compressor (22) is in the form of a turbine compressor, reciprocating compressor, atmospheric steam engine or Stirling engine.

## Revendications

1. Dispositif pour éliminer de l'hydrogène,
- comportant un dispositif (21) pour la transformation d'hydrogène et d'oxygène,
- comportant une turbine (30, 36) qui est reliée à un arbre (26) solidairement en rotation,
- comportant un premier compresseur (22) qui est relié à l'arbre (26),
- dans lequel l'arbre (26) applique au premier compresseur (22) le mouvement de rotation produit par la turbine (30, 36),
**caractérisé en ce que**
- le dispositif (21) de transformation d'hydrogène et d'oxygène comprend deux conduites d'admission (20, 28) et une conduite d'échappement (29),
- une première conduite d'admission (20) sert à l'introduction d'un mélange gazeux contenant de l'hydrogène et une seconde conduite d'admission (28) sert à l'introduction d'un mélange gazeux contenant de l'oxygène, et dans lequel la conduite d'échappement (29) sert à l'échappement du mélange gazeux après une transformation au moins partielle de l'hydrogène et de l'oxygène et
- **en ce que** le premier compresseur (22) est relié à la seconde conduite d'admission (28) et amène le mélange gazeux contenant l'oxygène au dispositif (21) pour la transformation d'hydrogène et d'oxygène.

2. Dispositif selon la revendication 1 **caractérisé en ce que** la turbine (36) est disposée en amont du dispositif (21) pour la transformation d'hydrogène et d'oxygène et est reliée à la première conduite d'admission (20).

3. Dispositif selon la revendication 1 **caractérisé en ce que** la turbine (30) est disposée en aval du dispositif (21) pour la transformation d'hydrogène et d'oxygène et est reliée à la conduite d'échappement (29).

4. Dispositif selon l'une des revendications 1 à 3 **caractérisé en ce qu'**un deuxième compresseur (19) est disposé en amont du dispositif (21) pour la transformation d'hydrogène et d'oxygène, et est relié à la conduite d'admission (20).

5. Dispositif selon l'une des revendications 1 à 4 **caractérisé en ce que** le dispositif (21) pour la transformation d'hydrogène et d'oxygène contenus dans un mélange gazeux est constitué par un brûleur ou par un recombinateur (21)

6. Dispositif selon l'une des revendications 1 à 5 **caractérisé en ce que** le premier compresseur (22) et/ou le second compresseur (19) sont constitués par des compresseurs à turbine, des compresseurs à piston, des machines à vaporisation atmosphérique ou des moteurs Stirling.
